# EUROPÄISCHE PATENTSCHRIFT

(11) **EP 4 399 690 B1**
(45) Veröffentlichungstag und Bekanntmachung des Hinweises auf die Patenterteilung: **26.08.2026**
(21) Anmeldenummer: 22768612.8
(22) Anmeldetag: 06.09.2022
(51) Int. Cl.: G06V 10/82, G06V 20/60

(54) **COMPUTERIMPLEMENTIERTES VERFAHREN ZUR KLASSIFIZIERUNG VON ABFALL**
COMPUTER-IMPLEMENTED METHOD FOR CLASSIFYING WASTE
PROCÉDÉ MIS EN OEUVRE PAR ORDINATEUR POUR LA CLASSIFICATION DE DÉCHETS

(30) Priorität: 07.09.2021 AT 507042021
(43) Veröffentlichungstag der Anmeldung: 17.07.2024
(73) Patentinhaber: Brantner Environment Group GmbH, 3500 Krems (AT)
(72) Erfinder: HEINZL, Rene, 1050 Wien (AT); PASCHING, Christoph, 3382 Loosdorf (AT)
(74) Vertreter: Puchberger & Partner Patentanwälte
(86) Internationale Anmeldenummer: PCT/AT2022/060305
(87) Internationale Veröffentlichungsnummer: WO 2023/035020

(56) Entgegenhaltungen:
- NOWAKOWSKI PIOTR ET AL: "Application of deep learning object classifier to improve e-waste collection planning", WASTE MANAGEMENT, ELSEVIER, NEW YORK, NY, US, vol. 109, 28 April 2020 (2020-04-28), pages 1 - 9, XP086158194, ISSN: 0956-053X, [retrieved on 20200428], DOI: 10.1016/J.WASMAN.2020.04.041
- YASH NARAYAN: "DeepWaste: Applying Deep Learning to Waste Classification for a Sustainable Planet", ARXIV.ORG, CORNELL UNIVERSITY LIBRARY, 201 OLIN LIBRARY CORNELL UNIVERSITY ITHACA, NY 14853, 15 January 2021 (2021-01-15), XP081859906
- CITY OF HARRISBURG - WHBG20: "Recycle Coach Demo Video", 13 June 2018 (2018-06-13), XP093001477, Retrieved from the Internet <URL:https://www.youtube.com/watch?v=513EfQFvlCo> [retrieved on 20221123]

## Beschreibung

Die Erfindung betrifft ein computerimplementiertes Verfahren zur Klassifizierung von Abfall.

Aus dem Stand der Technik ist bekannt, ein Abfallgemenge umfassend eine Vielzahl unterschiedlicher Objekte in vorgegebene Abfallkategorien zu klassifizieren.

Beispielsweise kann ein Abfallgemenge in recyclebaren Abfall wie Glas, PET-Flaschen, Getränkedosen, Batterien, Holz und Metalle sowie biologischen Abfall und Restmüll unterteilt werden. Diese Klassifizierung erfolgt in Privathaushalten und Büros in der Regel manuell. Relevanter Stand der Technik sind:
YASH NARAYAN: "DeepWaste: Applying Deep Learning to Waste Classification for a Sustainable Planet",ARXIV.ORG, CORNELL UNIVERSITY LIBRARY, 201 OLIN LIBRARY CORNELL UNIVERSITY ITHACA, NY 14853, 15. Januar 2021 (2021-01-15),
und
NOWAKOWSKI PIOTR ET AL: "Application of deep learning object classifier to improve e-waste collection planning",WASTE MANAGEMENT, ELSEVIER, NEW YORK, NY, US, Bd. 109, 28. April 2020 (2020-04-28), Seiten 1-9, ISSN: 0956-053X, DOI: 10.1016/J.WASMAN.2020.04.041

Ein wesentliches Problem bei der manuellen Klassifizierung von Abfall besteht jedoch darin, dass in unterschiedlichen geografischen Regionen eine unterschiedliche Zahl von Abfallkategorien vorgesehen sind, welche gegebenenfalls auch unterschiedlich definiert sein können. Beispielsweise können in einer geografischen Region drei Abfallkategorien vorgesehen (Restmüll, Biomüll, Papier), während in einer anderen geografischen Region fünf Abfallkategorien vorgesehen sind (Restmüll, Biomüll, Papier, Kunststoff, Glas). In manchen Regionen können bestimmte Abfallobjekte (beispielsweise Getränkeverbundkartons) zur Entsorgung in einer ersten Abfallkategorie (z.B. Restmüll) vorgesehen sein, während dieselben Abfallobjekte in anderen Regionen in einer anderen Abfallkategorie (z.B. Kunststoff) vorgesehen sind. Dadurch wird die manuelle Klassifizierung der Abfallobjekte eines Abfallgemenges in Abfallkategorien schwierig und fehlerhaft.

Aufgabe der Erfindung ist es, diese und andere Probleme herkömmlicher Verfahren zur Klassifizierung von Abfall zu beheben und ein Verfahren zur Klassifizierung von Abfall bereitzustellen, welches dem Benutzer eine schnelle und fehlerfreie Klassifizierung der in einem Abfallgemenge befindlichen Abfallobjekte erlaubt.

Erfindungsgemäß werden dieses und andere Probleme durch ein Verfahren nach Anspruch 1 gelöst.

Ein erfindungsgemäßes computerimplementiertes Verfahren dient zur Klassifizierung von Abfall in vorgegebene Abfallkategorien K₁, K₂, ..., Kₙ unter Verwendung einer Bildaufnahmeeinheit und einer Datenverarbeitungseinheit. Bei der Bildaufnahmeeinheit kann es sich um eine Foto- oder Videokamera, eine ToF (Time-of-Flight) Kamera oder dergleichen handeln. Die Bildaufnahmeeinheit kann auch mehrere in unterschiedlichen Abständen oder Winkeln zueinander angeordnete Kameras umfassen. Die Datenverarbeitungseinheit kann als Mikrocontroller oder Mikrocomputer ausgebildet sein und eine zentrale Verarbeitungseinheit (CPU), einen flüchtigen Halbleiterspeicher (RAM), einen nichtflüchtigen Halbleiterspeicher (ROM, SSD-Festplatte), einen magnetischen Speicher (Festplatte) und/oder einen optischen Speicher (CD-ROM) sowie Schnittstelleneinheiten (Ethernet, USB) und dergleichen umfassen. Die Bestandteile derartiger Datenverarbeitungseinheiten sind dem Fachmann bekannt.

Ein erfindungsgemäßes Verfahren umfasst die folgenden Schritte:
In einem ersten Schritt erstellt die Bildaufnahmeeinheit eine Aufnahme in Form zumindest eines Bildes oder eines Videos eines zu separierenden Abfallgemenges umfassend ein oder mehrere Abfallobjekte.

In einem zweiten Schritt erkennt ein mit der Datenverarbeitungseinheit verbundenes oder in der Datenverarbeitungseinheit integriertes neuronales Bilderkennungsnetz die im Bild abgebildeten Abfallobjekte. Dabei können herkömmliche Bilderkennungsnetze vorgesehen sein, die auf die Erkennung von Objekten in Bildern spezialisiert sind.

In einem nächsten Schritt wird zumindest eines der erkannten Abfallobjekte in eine der vorgegebenen Abfallkategorien K₁, K₂, ..., Kₙ klassifiziert. Dabei kann vorgesehen sein, dass die Abfallkategorien K₁, K₂, ..., Kₙ in einem Speicher der Datenverarbeitungseinheit vorab hinterlegt wurden.

Die Datenverarbeitungseinheit und das neuronale Bilderkennungsnetz können vorzugsweise zur Gänze in einem Smartphone angeordnet sein. Es kann jedoch auch vorgesehen sein, dass die Datenverarbeitungseinheit in einem Smartphone angeordnet ist und über eine Schnittstelle, beispielsweise eine drahtlose Verbindung, mit einem externen Server, beispielsweise einem Server im Internet, kommuniziert, auf dem sich das neuronale Bilderkennungsnetz befindet. Insbesondere kann das neuronale Bilderkennungsnetz als Softwaremodul in der Datenverarbeitungseinheit, in einem von der Datenverarbeitungseinheit getrennten Computer oder in einem externen Server vorgesehen sein.

Erfindungsgemäß kann insbesondere vorgesehen sein, dass das Bilderkennungsnetz oder die Datenverarbeitungseinheit (2) aus dem Bild einzelne Teilbilder mit erkannten Abfallobjekten erzeugt und diese zur weiteren Klassifizierung verwendet werden.

Erfindungsgemäß ist vorgesehen, dass die Klassifizierung der Abfallobjekte auf der Grundlage eines geografischen Standorts P erfolgt, insbesondere des geografischen Standorts der Bildaufnahmeeinheit oder des aufgenommenen Abfallgemenges. Dadurch wird erreicht, dass der Zusammenhang zwischen dem Abfallobjekt, dem geografischen Standort und der Abfallkategorie berücksichtigt wird.

Insbesondere kann vorgesehen sein, dass zur Klassifizierung der Abfallobjekte in eine der vorgegebenen Abfallkategorien K₁, K₂, ..., Kₙ eine mit der Datenverarbeitungseinheit verbundene oder in der Datenverarbeitungseinheit integrierte **Datenbank** verwendet wird, in der ein Zusammenhang zwischen dem Standort P, einer Zahl vordefinierter Abfallobjekte und den vordefinierten Abfallkategorien K₁, K₂, ..., Kₙ hinterlegt ist. Beispielsweise kann in dieser Datenbank die Information hinterlegt sein, dass in einer bestimmten Stadt elektrische Geräte stets in den Sondermüll gehören.

Alternativ kann vorgesehen sein, dass zur Klassifizierung der Abfallobjekte ein mit der Datenverarbeitungseinheit verbundenes oder in der Datenverarbeitungseinheit integriertes neuronales **Abfallklassifizierungsnetz** verwendet wird.

Zur robusten Erkennung und Klassifizierung der Abfallobjekte kann das Abfallklassifizierungsnetz vorab mit Trainingsdaten trainiert werden, welche einen Zusammenhang zwischen dem Standort P, vordefinierten Abfallobjekten und den Abfallkategorien K₁, K₂, ..., Kₙ abbilden. Die Trainingsdaten können insbesondere Fotos unterschiedlicher Abfallobjekte, unterschiedliche geografische Positionen, als auch die in Abhängigkeit der Position jeweils zugeordnete Abfallkategorie umfassen. Somit kann ein und dasselbe Abfallobjekt in Abhängigkeit der Position in unterschiedliche Abfallkategorien fallen; das neuronale Abfallklassifizierungsnetz wurde zur Erkennung dieses Zusammenhangs vorab mit entsprechenden Trainingsdaten angepasst.

Durch die erfindungsgemäße Verschneidung der Daten aus der Bilderkennung mit dem geografischen Standort des Abfallgemenges wird erreicht, dass dem Benutzer unmittelbar die Information gegeben werden kann, in welche Abfallkategorie die im Abfallgemenge vorliegenden Abfallobjekte gehören. Folglich muss der Benutzer nicht nachschlagen, wie die lokalen Regeln an seiner geografischen Position lauten, sondern kann unmittelbar die Abfallobjekte korrekt entsorgen lassen.

Erfindungsgemäß kann vorgesehen sein, dass der geografische Standort P von einem mit der Datenverarbeitungseinheit verbundenen Positionssensor bereitgestellt wird. Dabei kann es sich um einen in das Smartphone integrierten Positionssensor, beispielsweise einen GPS-Sensor handeln.

Erfindungsgemäß kann aber auch vorgesehen sein, dass der geografische Standort P von einer mit der Datenverarbeitungseinheit über eine Kommunikationseinheit verbundenen Datenbank, insbesondere von einer auf einem Server im Internet befindlichen Datenbank, auf Grundlage von in der Datenverarbeitungseinheit gespeicherten Benutzerdaten bereitgestellt wird. Beispielsweise kann die Wohnadresse des Benutzers, der das Verfahren durchführt, in der Datenbank hinterlegt sein und als Position verwendet werden.

Erfindungsgemäß kann vorgesehen sein, dass die Datenverarbeitungseinheit ein modifiziertes Bild erzeugt und das modifizierte Bild auf der Benutzerschnittstelle, insbesondere dem Touch-Screen des Smartphones, darstellt. Das modifizierte Bild kann Markierungen aufweisen, welche für den Benutzer die im Bild detektierten Abfallobjekte markiert, beispielsweise mit einem Rahmen versieht. Der Benutzer kann dann aufgefordert werden, zumindest eines der im modifizierten Bild markierten Abfallobjekte auszuwählen, worauf die Abfallkategorie K₁, K₂, ..., Kₙ des ausgewählten Abfallobjektes auf der Benutzerschnittstelle angezeigt wird. Dadurch erhält der Benutzer spezifische Informationen über ausgewählte Abfallobjekte.

Erfindungsgemäß kann ferner vorgesehen sein, dass durch Abfrage einer mit der Datenverarbeitungseinheit über eine Kommunikationseinheit verbundenen Datenbank, insbesondere einer auf einem Server im Internet befindlichen Datenbank, Informationen betreffend die Entsorgung des ausgewählten Abfallobjekts angezeigt werden. Insbesondere können für das vom Benutzer ausgewählte Abfallobjekt Informationen über die ermittelte Abfallkategorie und deren Handhabung an der Position auf der Benutzerschnittstelle angezeigt werden.

Ferner kann vorgesehen sein, dass die Datenverarbeitungseinheit durch Abfrage einer mit der Datenverarbeitungseinheit über eine Kommunikationseinheit verbundenen Datenbank einen lokalen Anbieter zur Entsorgung des Abfallobjekts auswählt und den ermittelten Anbieter auf der Benutzerschnittstelle anzeigt.

Besonders vorteilhaft kann die Datenverarbeitungseinheit über die Kommunikationseinheit einen elektronischen Auftrag an diesen Anbieter zur Entsorgung des Abfallobjekts senden.

Die Erfindung betrifft ferner ein computerlesbares Speichermedium, umfassend Anweisungen, die ein elektronisches Gerät umfassend eine Bildaufnahmeeinheit und eine Datenverarbeitungseinheit sowie gegebenenfalls eine Benutzerschnittstelle und gegebenenfalls eine Kommunikationseinheit zur Ausführung eines erfindungsgemäßen Verfahrens veranlassen.

Die Erfindung betrifft ferner eine Vorrichtung zur Klassifizierung von Abfall, umfassend eine Bildaufnahmeeinheit, eine Datenverarbeitungseinheit, gegebenenfalls eine Benutzerschnittstelle und gegebenenfalls eine Kommunikationseinheit, wobei die Vorrichtung zur Ausführung eines erfindungsgemäßen Verfahrens ausgebildet ist. Insbesondere kann es sich bei der Vorrichtung um ein Mobiltelefon, vorzugsweise ein Smartphone, handeln.

Weitere erfindungsgemäße Merkmale ergeben sich aus den Ansprüchen, den Ausführungsbeispielen und den Figuren.

Die Erfindung wird im Folgenden anhand eines exemplarischen und nicht ausschließlichen Ausführungsbeispiels erläutert.

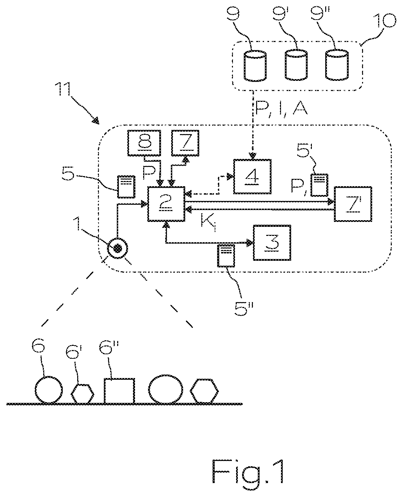

Fig. 1 zeigt ein exemplarisches Ausführungsbeispiel eines erfindungsgemäßen Verfahrens anhand eines schematischen Blockschaltbildes.

Das schematische Blockschaltbild in Fig.1 zeigt ein Smartphone 11 mit einer Bildaufnahmeeinheit 1 in Form einer Kamera, einer Datenverarbeitungseinheit 2, einer Benutzerschnittstelle 3 in Form eines Touch-Screens und einer Kommunikationseinheit 4 in Form einer Mobilfunk- oder WLAN-Schnittstelle. Ferner ist im Smartphone 11 ein Positionssensor 8 vorgesehen.

Ferner gezeigt ist ein Abfallgemenge mit mehreren Abfallobjekten 6, 6', 6", beispielsweise Biomüll sowie Objekte aus Metall, Glas, und Kunststoff. Das Smartphone 11 erstellt mit der Bildaufnahmeeinheit 1 ein Bild 5 des Abfallgemenges und überträgt dieses Bild 5 an die Datenverarbeitungseinheit 2.

Die Datenverarbeitungseinheit 2 steht in Verbindung mit einem neuronale Bilderkennungsnetz 7 und übermittelt diesem das Bild 5. Zusätzlich erhält die Datenverarbeitungseinheit 2 den aktuellen geografischen Standort P des Smartphones 11 von einem integrierten Positionssensor 8.

In anderen Ausführungsbeispielen der Erfindung wird der geografische Standort P von einer mit der Datenverarbeitungseinheit 2 über eine Kommunikationseinheit 4 verbundenen Datenbank 9, nämlich von einer auf einem Server 10 im Internet befindlichen Datenbank 9, bereitgestellt. Zu diesem Zweck übermittelt die Datenverarbeitungseinheit 2 dem Server 10 die Benutzerdaten des aktuellen Benutzers, worauf in der Datenbank 9 gespeicherte Positionsdaten des Benutzers (z.B. der Wohnort des Benutzers) bereitgestellt werden. Diese Kommunikation ist in Fig. 1 schematisch angedeutet, da sie nicht zwingend in jeder Ausführung der Erfindung vorliegen muss.

Die Datenverarbeitungseinheit 2 erhält vom Bilderkennungsnetz 7 Informationen über die im Bild 5 erkannten Abfallobjekte 6, 6', 6", beispielsweise dass es sich um eine Getränkedose, eine Batterie und eine Bananenschale handelt. Die Datenverarbeitungseinheit 2 erzeugt aus dem Bild 5 eine Reihe von Teilbildern 5', welche jeweils die betreffenden Abfallobjekte 6, 6', 6" enthalten, und übermittelt diese Teilbilder 5' gemeinsam mit der Position P an ein neuronales Abfallklassifizierungsnetz 7'. In weiteren, nicht dargestellten Ausführungsbeispielen kann vorgesehen sein, dass die Klassifizierung statt mit einem neuronalen Netz durch eine mit der Datenverarbeitungseinheit 2 verbundene Datenbank erfolgt.

Das neuronale Abfallklassifizierungsnetz 7' klassifiziert nun aufgrund der übermittelten Teilbilder 5' und der geografischen Position P die im Bild 5 erkannten Abfallobjekte 6, 6', 6" in vorgegebene Abfallkategorien K₁, K₂, ..., Kₙ.

Vorab wurde das neuronale Abfallklassifizierungsnetz 7' durch speziell auf die Erkennung von Abfallobjekten angepasste Trainingsdaten trainiert. Die erfindungsgemäß vorgesehenen Trainingsdaten des neuronalen Abfallklassifizierungsnetz 7' umfassen zu diesem Zweck nicht nur Fotos verschiedener Objekte (Biomüll, Glas, Kunststoff, Papier, Metall, Batterien, etc.), sondern auch deren jeweilige Zuordnung zu vorbestimmten Abfallkategorien in Abhängigkeit der geografischen Position P. Beispielsweise ist an einer ersten Position P₁ das Abfallobjekt "Metall" der Abfallkategorie K₇ zugeordnet, hingegen an einer zweiten Position P₂ der Abfallkategorie K₃.

Die vom neuronalen Abfallklassifizierungsnetz 7' ermittelte Abfallkategorie Kᵢ wird zurück an die Datenverarbeitungseinheit 2 übermittelt. In Folge erzeugt die Datenverarbeitungseinheit 2 ein modifiziertes Bild 5", welches eine Überlagerung des ursprünglichen Bildes 5 mit den erkannten Abfallobjekten 6, 6', 6" ist. Beispielsweise kann im modifizierten Bild 5" jedes im Abfallgemenge detektierte Abfallobjekt einen optisch hervorstechenden Rahmen oder dergleichen aufweisen, um dem Benutzer zu verdeutlichen, dass dieses so markierte Objekt als ein Abfallobjekt 6, 6', 6" erkannt wurde.

Das modifizierte Bild 5" wird an die Benutzerschnittstelle 3, nämlich den Touch-Screen des Smartphones 11, übermittelt, und der Benutzer wird aufgefordert, zumindest eines der im modifizierten Bild 5" markierten Abfallobjekte 6, 6', 6" auszuwählen. Sobald der Benutzer eines der markierten Abfallobjekte 6, 6', 6" auswählt, wird die Abfallkategorie K₁, K₂, ..., Kₙ des ausgewählten Abfallobjektes 6, 6', 6" auf der Benutzerschnittstelle 3 angezeigt, sodass der Benutzer die grundlegende Information erhält, welcher Abfallkategorie Kᵢ das ausgewählte Abfallobjekt an seinem Standort entspricht.

Danach stellt die Datenverarbeitungseinheit 2 über die Kommunikationseinheit 4 eine Verbindung mit einer externen Datenbank 9', die sich auf einem Server 10 im Internet befindet, her. Die Datenverarbeitungseinheit 2 übermittelt die ermittelte Abfallkategorie Kᵢ und die Position P und erhält von der Datenbank 9' Informationen I betreffend die Entsorgung der entsprechenden Abfallkategorie Kᵢ an dieser konkreten Position P. Diese Informationen I werden von der Datenverarbeitungseinheit 2 entgegengenommen und auf der Benutzerschnittstelle 3 angezeigt. Dadurch erhält der Benutzer detaillierte Information, wie an seiner Position mit der ermittelten Abfallkategorie Kᵢ umzugehen ist. Dabei kann es sich beispielsweise auch um Informationen betreffend naheliegender Sammelstellen oder Abholtermine dieser Abfallkategorie handeln.

Ferner stellt die Datenverarbeitungseinheit 2 über die Kommunikationseinheit 4 eine Verbindung mit einer externen Datenbank 9", die sich auf einem Server 10 im Internet befindet, her. Die Datenverarbeitungseinheit 2 übermittelt die Abfallkategorie Kᵢ und die Position P und erhält von der Datenbank 9' Informationen betreffend die lokalen Anbieter zur Entsorgung der Abfallkategorie Kᵢ an dieser konkreten Position P.

Diese Informationen A werden von der Datenverarbeitungseinheit 2 entgegengenommen und auf der Benutzerschnittstelle 3 angezeigt.

In weiteren, nicht dargestellten Ausführungsbeispielen kann vorgesehen sein, dass die Datenverarbeitungseinheit 2 über die Kommunikationseinheit 4 einen elektronischen Auftrag an einen der ermittelten Anbieter A zur Entsorgung des vom Benutzer ausgewählten Abfallobjekts 6, 6', 6" sendet.

Die Erfindung beschränkt sich nicht auf die beschriebenen Ausführungsbeispiele, sondern umfasst auch weitere Ausführungen der vorliegenden Erfindung im Rahmen der nachfolgenden Patentansprüche.

## Patentansprüche

1. Computerimplementiertes Verfahren zur Klassifizierung von Abfall in vorgegebene Abfallkategorien K₁, K₂, ..., Kₙ mit einer Bildaufnahmeeinheit (1) und einer Datenverarbeitungseinheit (2),
wobei das Verfahren die folgenden Schritte umfasst:
a. Aufnahme, durch die Bildaufnahmeeinheit (1), eines Bildes (5) eines zu separierenden Abfallgemenges umfassend Abfallobjekte (6, 6', 6");
b. Erkennung, durch ein mit der Datenverarbeitungseinheit (2) verbundenes oder in der Datenverarbeitungseinheit (2) integriertes neuronales **Bilderkennungsnetz** (7), der im Bild (5) abgebildeten Abfallobjekte (6, 6', 6");
c. Klassifizierung zumindest eines der Abfallobjekte (6, 6', 6") in eine der vorgegebenen Abfallkategorien K₁, K₂, ..., Kₙ,
**dadurch gekennzeichnet, dass**
d. die Klassifizierung der Abfallobjekte (6, 6', 6") in eine der vorgegebenen Abfallkategorien K₁, K₂, ..., Kₙ auf der Grundlage des geografischen Standorts P der Bildaufnahmeeinheit (1) oder des Abfallgemenges, durchgeführt wird, wobei
e. der geografische Standort P von einem mit der Datenverarbeitungseinheit (2) verbundenen Positionssensor (8) bereitgestellt wird, und wobei
f. zur Klassifizierung der Abfallobjekte (6, 6', 6") in eine der vorgegebenen Abfallkategorien K₁, K₂, ..., Kₙ entweder
i. eine mit der Datenverarbeitungseinheit (2) verbundene oder in der Datenverarbeitungseinheit (2) integrierte **Datenbank** verwendet wird, in der ein Zusammenhang zwischen dem Standort P, vordefinierten Abfallobjekten (6, 6', 6") und den Abfallkategorien K₁, K₂, ..., Kₙ hinterlegt ist, oder
ii. ein mit der Datenverarbeitungseinheit (2) verbundenes oder in der Datenverarbeitungseinheit (2) integriertes neuronales **Abfallklassifizierungsnetz (7')** verwendet wird, das mit Trainingsdaten trainiert wurde, welche einen Zusammenhang zwischen dem Standort P, vordefinierten Abfallobjekten (6, 6', 6") und den Abfallkategorien K₁, K₂, ..., Kₙ abbilden.

2. Verfahren nach Anspruch 1, **dadurch gekennzeichnet, dass** Bilderkennungsnetz (7) oder die Datenverarbeitungseinheit (2) aus dem Bild (5) einzelne **Teilbilder (5')** mit erkannten Abfallobjekten (6, 6', 6") erzeugt und diese Teilbilder (5') zur Klassifizierung der erkannten Abfallobjekte (6, 6', 6") verwendet werden.

3. Verfahren nach einem der Ansprüche 1 oder 2, **dadurch gekennzeichnet, dass** die Datenverarbeitungseinheit (2) ein **modifiziertes Bild (5")** umfassend das Bild (5) mit Markierungen der darin detektierten Abfallobjekte (6, 6', 6") erzeugt und das modifizierte Bild (5") auf einer Benutzerschnittstelle (3), insbesondere einem Touch-Screen, dargestellt wird, und der Benutzer aufgefordert wird, zumindest eines der im modifizierten Bild (5") markierten Abfallobjekte (6, 6', 6") auszuwählen, worauf die klassifizierte Abfallkategorie K₁, K₂, ..., Kₙ des ausgewählten Abfallobjektes (6, 6', 6") auf der Benutzerschnittstelle (3) angezeigt wird.

4. Verfahren nach Anspruch 3, **dadurch gekennzeichnet, dass** durch Abfrage einer mit der Datenverarbeitungseinheit (2) über eine Kommunikationseinheit (4) verbundenen Datenbank (9'), insbesondere einer auf einem Server (10) im Internet befindlichen Datenbank (9'), auf Grundlage der für das vom Benutzer ausgewählte Abfallobjekt (6, 6', 6") ermittelten Abfallkategorien K₁, K₂, ..., Kₙ und der Position P Informationen I betreffend die Entsorgung des Abfallobjekts (6, 6', 6") ermittelt und diese Informationen I auf der Benutzerschnittstelle (3) angezeigt werden.

5. Verfahren nach einem der Ansprüche 3 oder 4, **dadurch gekennzeichnet, dass** die Datenverarbeitungseinheit (2) durch Abfrage einer mit der Datenverarbeitungseinheit (2) über eine Kommunikationseinheit (4) verbundenen Datenbank (9"), insbesondere einer auf einem Server (10) im Internet befindlichen Datenbank (9"), einen lokalen Anbieter A zur Entsorgung des vom Benutzer ausgewählten Abfallobjekts (6, 6', 6") auswählt und den ermittelten Anbieter auf der Benutzerschnittstelle (3) anzeigt.

6. Verfahren nach Anspruch 5, **dadurch gekennzeichnet, dass** die Datenverarbeitungseinheit (2) über die Kommunikationseinheit (4) einen elektronischen Auftrag an den Anbieter A zur Entsorgung des klassifizierten Abfallobjekts (6, 6', 6") sendet.

7. Computerlesbares Speichermedium, umfassend Anweisungen, die ein elektronisches Gerät umfassend eine Bildaufnahmeeinheit (1) und eine Datenverarbeitungseinheit (2) sowie gegebenenfalls eine Benutzerschnittstelle (3) und gegebenenfalls eine Kommunikationseinheit (4) zur Ausführung eines Verfahrens nach einem der Ansprüche 1 bis 6 veranlassen.

8. Vorrichtung zur Klassifizierung von Abfall, umfassend eine Bildaufnahmeeinheit (1), eine Datenverarbeitungseinheit (2), gegebenenfalls eine Benutzerschnittstelle (3) und gegebenenfalls eine Kommunikationseinheit (4), **dadurch gekennzeichnet, dass** die Vorrichtung zur Ausführung eines Verfahrens nach einem der Ansprüche 1 bis 6 ausgebildet ist.

9. Vorrichtung nach Anspruch 8, **dadurch gekennzeichnet, dass** die Vorrichtung ein Mobiltelefon, insbesondere ein Smartphone (11), umfasst.

## Claims

1. A computer-implemented method for classifying waste into predefined waste categories K₁, K₂, ..., Kₙ using an image recording unit (1) and a data processing unit (2),
wherein the method comprises the following steps:
a. recording, by way of the image recording unit (1), an image (5) of a waste mixture to be separated comprising waste objects (6, 6', 6");
b. detecting, by way of a neural **image recognition network (7)** connected to the data processing unit (2) or integrated in the data processing unit (2), the waste objects (6, 6', 6") depicted in the image (5);
c. classifying at least one of the waste objects (6, 6', 6") into one of the predefined waste categories K₁, K₂, ..., Kₙ;
**characterised in that**
d. the waste objects (6, 6', 6") are classified into one of the predefined waste categories K₁, K₂, ..., Kₙ on the basis of the geographical location P of the image recording unit (1) or of the unseparated waste, wherein
e. the geographical location P is provided by a location sensor (8) connected to the data processing unit (2), and wherein
f. to classify the waste objects (6, 6', 6") into one of the predefined waste categories K₁, K₂, ..., Kₙ either
i a **database,** which is connected to the data processing unit (2) or integrated in the data processing unit (2) and in which a relationship between the location P, predefined waste objects (6, 6', 6") and the waste categories K₁, K₂, ..., Kₙ is stored, is used, or
ii a neural **waste classification network (7'),** which is connected to the data processing unit (2) or integrated in the data processing unit (2) and has been trained with training data mapping a relationship between the location P, predefined waste objects (6, 6', 6") and the waste categories K₁, K₂, ..., Kₙ, is used.

2. The method according to claim 1, **characterised in that** the image recognition network (7) or the data processing unit (2) creates from the image (5) **image sections (5')** displaying detected waste objects (6, 6', 6") and uses these image sections (5') to classify the detected waste objects (6, 6', 6").

3. The method according to any one of claims 1 or 2, **characterised in that** the data processing unit (2) creates a **modified image (5")** comprising the image (5) that highlights the waste objects (6, 6', 6") detected in the image and the modified image (5") is displayed on a user interface (3), particularly on a touch screen, and the user is prompted to select at least one of the highlighted waste objects (6, 6', 6") in the modified image (5"), whereupon the classified waste category K₁, K₂, ..., Kₙ of the selected waste object (6, 6', 6") is displayed on the user interface (3).

4. The method according to claim 3, **characterised in that** by querying a database (9') connected to the data processing unit (2) via a communication unit (4), in particular a database (9') located on a server (10) on the Internet, information I relating to the disposal of the waste object (6, 6', 6") is determined on the basis of the waste categories K₁, K₂, ..., Kₙ determined for the waste object (6, 6', 6") selected by the user and on the basis of the location P, and this information I is displayed on the user interface (3).

5. The method according to any one of claims 3 or 4, **characterised in that** the data processing unit (2) selects a local provider A for the disposal of the waste object (6, 6', 6") selected by the user by querying a database (9") connected to the data processing unit (2) via a communication unit (4), in particular a database (9") located on a server (10) on the Internet, and displays the identified provider on the user interface (3).

6. The method according to claim 5, **characterised in that** the data processing unit (2) sends an electronic order via the communication unit (4) to the provider A for the disposal of the classified waste object (6, 6', 6").

7. A computer-readable storage medium comprising instructions which cause an electronic device comprising an image recording unit (1) and a data processing unit (2) and optionally a user interface (3) and optionally a communication unit (4) to employ a method according to any one of claims 1 to 6.

8. A device for classifying waste comprising an image recording unit (1), a data processing unit (2), optionally a user interface (3) and optionally a communication unit (4), **characterised in that** the device is configured to employ a method according to any one of claims 1 to 6.

9. The device according to claim 8, **characterised in that** the device comprises a mobile phone, in particular a smartphone (11).

## Revendications

1. Procédé mis en oeuvre par ordinateur pour la classification des déchets en catégories de déchets prédéfinies K₁, K₂, ..., Kₙ, comprenant une unité de capture d'images (1) et une unité de traitement de données (2),
le procédé comprenant les étapes suivantes :
a. capture, par l'unité de capture d'images (1), d'une image (5) d'un mélange de déchets à trier comprenant des objets-déchets (6, 6', 6") ;
b. reconnaissance, par un **réseau neuronal de reconnaissance d'images** (7) relié à l'unité de traitement de données (2) ou intégré à l'unité de traitement de données (2), des objets-déchets (6, 6', 6") représentés dans l'image (5) ;
c. classification d'au moins l'un des objets-déchets (6, 6', 6") dans l'une des catégories de déchets prédéfinies K₁, K₂, ..., Kₙ ;
**caractérisé en ce que**
d. la classification des objets-déchets (6, 6', 6") dans l'une des catégories de déchets prédéfinies K₁, K₂, ..., Kₙ s'effectue sur la base de la position géographique P de l'unité de capture d'images (1) ou du mélange de déchets, dans lequel
e. la position géographique P est fournie par un capteur de position (8) relié à l'unité de traitement de données (2), et dans lequel
f. lors de la classification des objets-déchets (6, 6', 6") dans l'une des catégories de déchets prédéfinies K₁, K₂, ..., Kₙ, est utilisée soit
i une **base de données** reliée à l'unité de traitement des données (2) ou intégrée à l'unité de traitement des données (2), dans laquelle un lien entre la position P d'objets-déchets prédéfinis (6, 6', 6") et les catégories de déchets K₁, K₂, ..., Kₙ est enregistré, soit
ii un **réseau neuronal de classification des déchets (7')** relié à l'unité de traitement des données (2) ou intégré à l'unité de traitement des données (2), lequel a été entraîné à l'aide de données d'entraînement qui montrent un lien entre la position P, des objets-déchets prédéfinis (6, 6', 6") et les catégories de déchets K₁, K₂, ..., Kₙ.

2. Procédé selon la revendication 1, **caractérisé en ce que** le réseau de reconnaissance d'images (7) ou l'unité de traitement de données (2) génère, à partir de l'image (5), des **images partielles (5')** individuelles avec des objets-déchets reconnus (6, 6', 6") et utilise ces images partielles (5') pour la classification des objets-déchets reconnus (6, 6', 6").

3. Procédé selon l'une des revendications 1 ou 2, **caractérisé en ce que** l'unité de traitement de données (2) génère une **image modifiée (5")** comprenant l'image (5) avec des marquages des objets-déchets (6, 6', 6") détectés dans celle-ci et que l'image modifiée (5") est affichée sur une interface utilisateur (3), en particulier un écran tactile, et que l'utilisateur est invité à sélectionner au moins l'un des objets-déchets (6, 6', 6") marqués dans l'image modifiée (5"), suite à quoi la catégorie de déchets classifiée en K₁, K₂, ..., Kₙ de l'objet-déchet sélectionné (6, 6', 6") s'affiche sur l'interface utilisateur (3).

4. Procédé selon la revendication 3, **caractérisé en ce que** des informations I concernant l'élimination de l'objet-déchet (6, 6', 6") sont déterminées par interrogation d'une base de données (9') reliée à l'unité de traitement de données (2) via une unité de communication (4), en particulier d'une base de données (9') située sur un serveur (10) sur Internet, sur la base des catégories de déchets K₁, K₂, ..., Kₙ déterminées pour l'objet-déchet (6, 6', 6") sélectionné par l'utilisateur et de la position P, et ces informations I sont affichées sur l'interface utilisateur (3).

5. Procédé selon l'une des revendications 3 ou 4, **caractérisé en ce que** l'unité de traitement de données (2) sélectionne un prestataire local A pour l'élimination de l'objet-déchet (6, 6', 6") par interrogation d'une base de données (9") reliée à l'unité de traitement de données (2) via une unité de communication (4), en particulier d'une base de données (9") située sur un serveur (10) sur Internet, et affiche le prestataire identifié sur l'interface utilisateur (3).

6. Procédé selon la revendication 5, **caractérisé en ce que** l'unité de traitement des données (2) envoie, via l'unité de communication (4), une commande électronique au prestataire A en vue de l'élimination de l'objet-déchet classifié (6, 6', 6").

7. Support de stockage lisible par ordinateur, comprenant des instructions qui amènent un dispositif électronique, comprenant une unité de capture d'images (1) et une unité de traitement de données (2), ainsi que éventuellement une interface utilisateur (3) et éventuellement une unité de communication (4), à mettre en œuvre un procédé selon l'une des revendications 1 à 6.

8. Dispositif destiné à la classification des déchets, comprenant une unité de capture d'images (1), une unité de traitement de données (2), éventuellement une interface utilisateur (3) et éventuellement une unité de communication (4), **caractérisé en ce que** le dispositif est conçu pour mettre en œuvre un procédé selon l'une des revendications 1 à 6.

9. Dispositif selon la revendication 8, **caractérisé en ce que** le dispositif comprend un téléphone mobile, en particulier un smartphone (11).
